(19) **Europäisches Patentamt / European Patent Office / Office européen des brevets**

(11) **EP 2 469 081 B1**

(12) **EUROPEAN PATENT SPECIFICATION**

(45) Date of publication and mention
of the grant of the patent:
**27.01.2021 Bulletin 2021/04**

(51) Int Cl.:
***F03D 7/04*** (2006.01)

(21) Application number: **11193322.2**

(22) Date of filing: **13.12.2011**

(54) **CONTROL SYSTEM, WIND FARM, AND METHODS OF OPTIMIZING THE OPERATION OF A WIND TURBINE**

STEUERUNGSSYSTEM, WINDPARK UND VERFAHREN ZUR OPTIMIERUNG DES BETRIEBS EINER WINDTURBINE

SYSTÈME DE CONTRÔLE, PARC ÉOLIEN ET PROCÉDÉS D'OPTIMISATION DU FONCTIONNEMENT D'UNE ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2010 US 974567**

(43) Date of publication of application:
**27.06.2012 Bulletin 2012/26**

(73) Proprietor: **General Electric Company**
**Schenectady, NY 12345 (US)**

(72) Inventors:
• **Srinivasan, Prashant**
**560066 Bangalore (IN)**
• **Giguere, Philippe**
**Greenville, SC South Carolina 29615 (US)**
• **Gupta, Manish**
**560066 Bangalore (IN)**
• **Mitra, Rwitam**
**560066 Bangalore (IN)**

(74) Representative: **Zimmermann & Partner**
**Patentanwälte mbB**
**Postfach 330 920**
**80069 München (DE)**

(56) References cited:
**EP-A2- 1 748 184**      **EP-A2- 2 216 549**
**WO-A1-03/064853**      **WO-A2-2010/037387**

## Description

The subject matter described herein relates generally to wind turbines and, more particularly, to a control system, a wind farm, and methods of optimizing the operation of a wind turbine.

Generally, a wind turbine includes a rotor that includes a rotatable hub assembly having multiple rotor blades. The rotor blades transform wind energy into a mechanical rotational torque that drives one or more generators by the rotor. The generators are sometimes, but not always, rotationally coupled to the rotor through a gearbox. The gearbox steps up the inherently low rotational speed of the rotor for the generator to efficiently convert the rotational mechanical energy to electrical energy, which is fed into a utility grid through at least one electrical connection. Gearless direct drive wind turbines also exist. The rotor, generator, gearbox and other components are typically mounted within a housing, or nacelle, positioned on top of a tower.

At least some known wind turbines are arranged in logical or geographical groups, known as wind farms. Moreover, at least some wind turbines within such wind farms generate acoustic emissions, or noise, during operation. Such acoustic emissions may be increased, for example, as a wind speed increases and/or as a rotational speed of the rotor increases. As each wind turbine within a wind farm operates, the combined acoustic emissions from the wind turbines may undesirably impact surrounding areas, such as population centers.

To account for the impact of such emissions, at least some known wind farms include at least one acoustic sensor. See WO 2010/037387, fur example. Generally, known acoustic sensors measure acoustic emissions and assess an economic penalty or another suitable penalty if the measured acoustic emissions exceed a threshold. Such penalties may be communicated to, and assessed against, a wind farm operator or to another entity that operates or owns the wind farm. Accordingly, an economic benefit of the wind turbines and the wind farm may be undesirably reduced as a result of such acoustic emission penalties.

The present invention is defined by the appended claims.

Various aspects and embodiments of the present invention will now be described in connection with the accompanying drawings, in which:

Fig. 1 is a perspective view of an exemplary wind turbine.

Fig. 2 is a partial sectional view of an exemplary nacelle suitable for use with the wind turbine shown in Fig. 1.

Fig. 3 is a block diagram of an exemplary turbine control system suitable for use with the wind turbine shown in Fig. 1.

Fig. 4 is a schematic view of an exemplary wind farm that may include the wind turbine shown in Fig. 1.

Fig. 5 is a flow diagram of an exemplary method of optimizing an operation of at least one wind turbine suitable for use with the wind turbine shown in Fig. 1 and/or within the wind farm shown in Fig. 4.

Fig. 6 is a flow diagram of another exemplary method of optimizing an operation of at least one wind turbine suitable for use with the wind turbine shown in Fig. 1 and/or within the wind farm shown in Fig. 4.

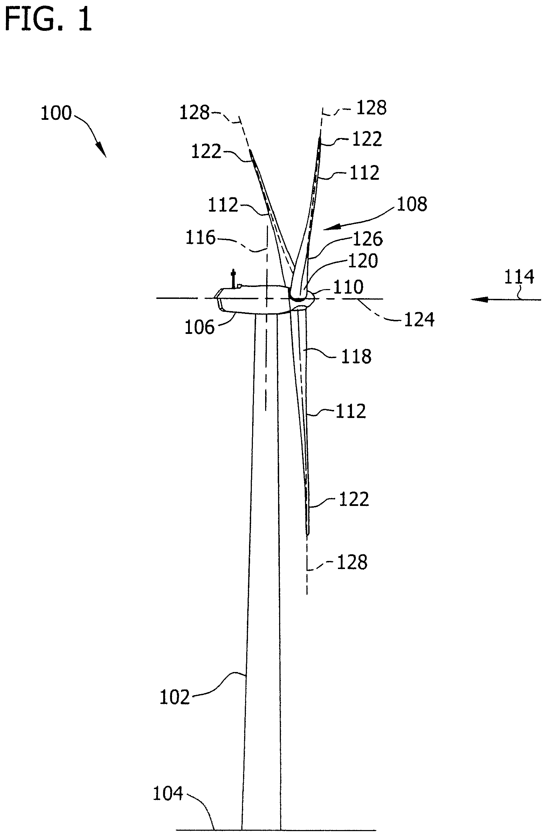

Fig. 1 is a schematic view of an exemplary wind turbine 100. In the exemplary embodiment, wind turbine 100 is a horizontal-axis wind turbine. Alternatively, wind turbine 100 may be a vertical-axis wind turbine. In the exemplary embodiment, wind turbine 100 includes a tower 102 extending from and coupled to a supporting surface 104. Tower 102 may be coupled to surface 104 with anchor bolts or with a foundation mounting piece (neither shown), for example. A nacelle 106 is coupled to tower 102, and a rotor 108 is coupled to nacelle 106. Rotor 108 includes a rotatable hub 110 and a plurality of rotor blades 112 coupled to hub 110. In the exemplary embodiment, rotor 108 includes three rotor blades 112. Alternatively, rotor 108 may have any suitable number of rotor blades 112 that enables wind turbine 100 to function as described herein. Tower 102 may have any suitable height and/or construction that enables wind turbine 100 to function as described herein.

Rotor blades 112 are spaced about hub 110 to facilitate rotating rotor 108, thereby transferring kinetic energy from wind 114 into usable mechanical energy, and subsequently, electrical energy. Rotor 108 and nacelle 106 are rotated about tower 102 on a yaw axis 116 to control a perspective of rotor blades 112 with respect to a direction of wind 114. Rotor blades 112 are mated to hub 110 by coupling a rotor blade root portion 118 to hub 110 at a plurality of load transfer regions 120. Load transfer regions 120 each have a hub load transfer region and a rotor blade load transfer region (both not shown in Fig. 1). Loads induced to rotor blades 112 are transferred to hub 110 through load transfer regions 120. Each rotor blade 112 also includes a rotor blade tip portion 122.

In the exemplary embodiment, rotor blades 112 have a length of between approximately 30 meters (m) (99 feet (ft)) and approximately 120 m (394 ft). Alternatively, rotor blades 112 may have any suitable length that enables wind turbine 100 to function as described herein. For example, rotor blades 112 may have a suitable length less than 30 m or greater than 120 m. As wind 114 contacts rotor blade 112, lift forces are induced to rotor blade 112 and rotation of rotor 108 about an axis of rotation 124 is induced as rotor blade tip portion 122 is accelerated.

A pitch angle (not shown) of rotor blades 112, i.e., an angle that determines the perspective of rotor blade 112 with respect to the direction of wind 114, may be changed by a pitch assembly (not shown in Fig. 1). More specifically, increasing a pitch angle of rotor blade 112 decreases an amount of rotor blade surface area 126 exposed to wind 114 and, conversely, decreasing a pitch angle of rotor blade 112 increases an amount of rotor blade surface area 126 exposed to wind 114. The pitch angles of rotor blades 112 are adjusted about a pitch axis 128 at each rotor blade 112. In the exemplary embodiment, the pitch angles of rotor blades 112 are controlled individually.

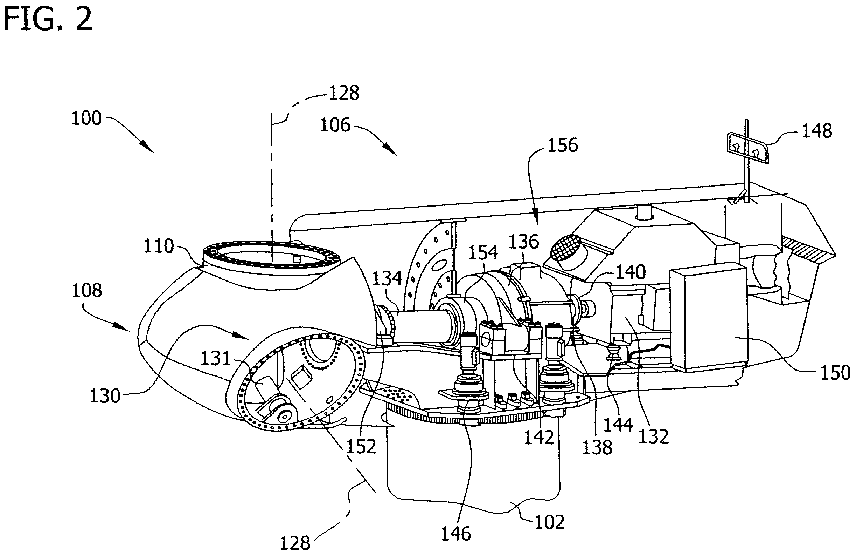

Fig. 2 is a partial sectional view of nacelle 106 of exemplary wind turbine 100 (shown in Fig. 1). Various components of wind turbine 100 are housed in nacelle 106. In the exemplary embodiment, nacelle 106 includes three pitch assemblies 130. Each pitch assembly 130 is coupled to an associated rotor blade 112 (shown in Fig. 1), and modulates a pitch of an associated rotor blade 112 about pitch axis 128. Only one of three pitch assemblies 130 is shown in Fig. 2. In the exemplary embodiment, each pitch assembly 130 includes at least one pitch drive motor 131.

As shown in Fig. 2, rotor 108 is rotatably coupled to an electric generator 132 positioned within nacelle 106 by a rotor shaft 134 (sometimes referred to as either a main shaft or a low speed shaft), a gearbox 136, a high speed shaft 138, and a coupling 140. Rotation of rotor shaft 134 rotatably drives gearbox 136 that subsequently drives high speed shaft 138. High speed shaft 138 rotatably drives generator 132 by coupling 140 and rotation of high speed shaft 138 facilitates production of electrical power by generator 132. Gearbox 136 is supported by a support 142 and generator 132 is supported by a support 144. In the exemplary embodiment, gearbox 136 utilizes a dual path geometry to drive high speed shaft 138. Alternatively, rotor shaft 134 is coupled directly to generator 132 by coupling 140.

Nacelle 106 also includes a yaw drive mechanism 146 that rotates nacelle 106 and rotor 108 about yaw axis 116 (shown in Fig. 1) to control the perspective of rotor blades 112 with respect to the direction of wind 114. Nacelle 106 also includes at least one meteorological mast 148 that includes a wind vane and anemometer (neither shown in Fig. 2). In one embodiment, meteorological mast 148 provides information, including wind direction and/or wind speed, to a turbine control system 150. In the exemplary embodiment, turbine control system 150 executes a SCADA (Supervisory, Control and Data Acquisition) program.

Pitch assembly 130 is operatively coupled to turbine control system 150. In the exemplary embodiment, nacelle 106 also includes a forward support bearing 152 and an aft support bearing 154. Forward support bearing 152 and aft support bearing 154 facilitate radial support and alignment of rotor shaft 134. Forward support bearing 152 is coupled to rotor shaft 134 near hub 110. Aft support bearing 154 is positioned on rotor shaft 134 near gearbox 136 and/or generator 132. Nacelle 106 may include any number of support bearings that enable wind turbine 100 to function as disclosed herein. Rotor shaft 134, generator 132, gearbox 136, high speed shaft 138, coupling 140, and any associated fastening, support, and/or securing device including, but not limited to, support 142, support 144, forward support bearing 152, and aft support bearing 154, are sometimes referred to as a drive train 156.

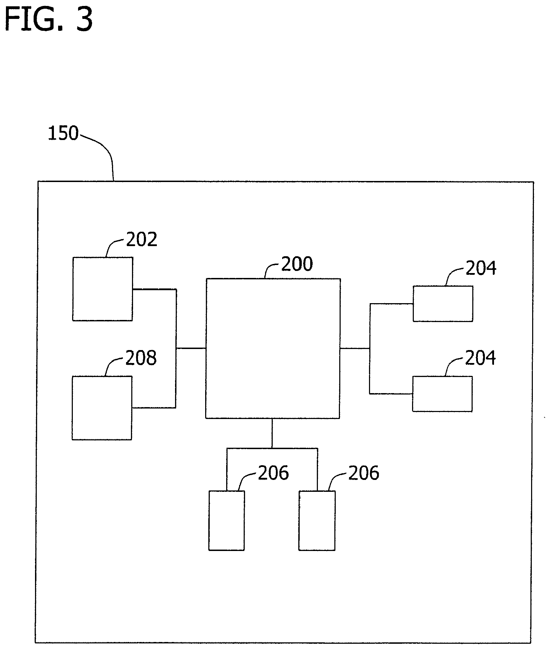

Fig. 3 is a block diagram of an exemplary turbine control system 150 that may be used with wind turbine 100 (shown in Fig. 1). In the exemplary embodiment, turbine control system 150 includes a processor 200 operatively coupled to a memory device 202, to at least one sensor 204, to at least one actuator 206, and to at least one communication device 208.

In the exemplary embodiment, processor 200 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above examples are exemplary only, and thus are not intended to limit in any way the definition and/or meaning of the term "processor."

Memory device 202 includes a computer readable medium, such as, without limitation, random access memory (RAM), flash memory, a hard disk drive, a solid state drive, a diskette, and/or a flash drive. Alternatively, memory device 202 may include any suitable computer readable medium that enables turbine control system 150 to function as described herein. Memory device 202 stores and transfers information and instructions to be executed by processor 200.

In the exemplary embodiment, sensors 204 include, for example, one or more of the following: a voltage sensor, a current sensor, a wind speed sensor, a wind direction sensor, an air density sensor, a temperature sensor, an accelerometer, and/or any suitable sensor. Sensors 204 provide measurements of one or more operating conditions of wind turbine 100. In the exemplary embodiment, the measured operating conditions of wind turbine 100 include, without limitation, a generated power, a generated torque, a rotational speed of rotor 108 (shown in Fig. 1), a mechanical loading of one or more components of wind turbine 100, an air density, an altitude, a wind speed, a wind direction, an ambient temperature, and/or any suitable condition at or within wind turbine 100.

Communication device 208, in the exemplary embodiment, includes a wireless receiver and a wireless transmitter (neither shown) that receive and transmit data from and to one or more devices. Such devices may include, but are not limited to only including, other wind turbines 100, acoustic receptors (not shown in Fig. 3), computer systems such as a wind farm server (not shown), and/or any other device that enables turbine control system 150 to function as described herein. Additionally or alternatively, communication device 208 receives and/or transmits data from and/or to other devices through one or more data cables or other conductors.

In the exemplary embodiment, processor 200 receives data from communication device 208 and/or sensors 204 and operates actuators 206 based on the received data to adjust one or more components and/or characteristics of wind turbine 100. For example, actuators 206 include and/or are incorporated within one or more pitch drive motors 131 (shown in Fig. 2), yaw drive mechanism 146 (shown in Fig. 2), and/or any other component that enables wind turbine 100 to operate as described herein. Accordingly, for example, actuators 206 adjust a pitch angle of one or more rotor blades 112 and/or a yaw angle of nacelle 106 (both shown in Fig. 1) to change a rotational speed of rotor 108 and/or to change an amount of power generated by wind turbine 100.

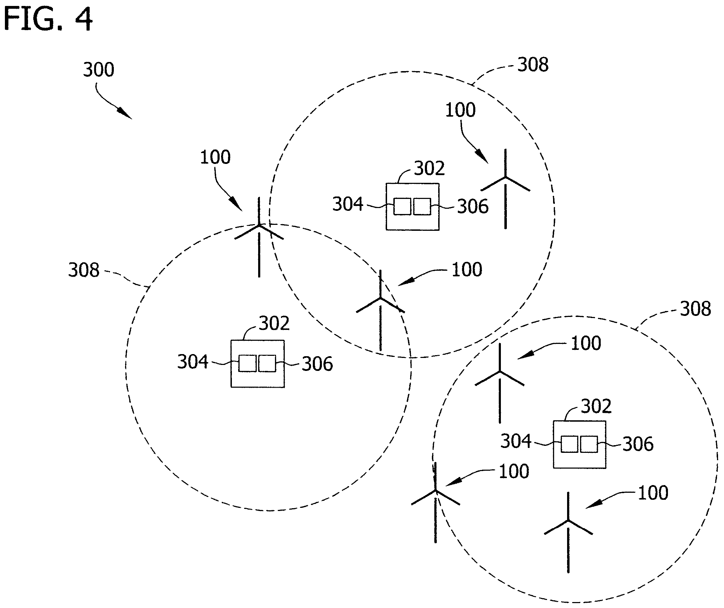

Fig. 4 is a schematic view of an exemplary wind farm 300. In the exemplary embodiment, wind farm 300 includes a plurality of wind turbines 100 and at least one acoustic receptor 302. As described above, each wind turbine 100 includes a turbine control system 150 (shown in Fig. 2) that communicates with acoustic receptors 302 and/or other wind turbines 100 (i.e., with turbine control system 150 of other wind turbines 100).

Each acoustic receptor 302, in the exemplary embodiment, includes an acoustic sensor 304 and a communication device 306 that includes a wireless transmitter and/or a wireless receiver (neither shown). Acoustic sensors 304 measure an amount of acoustic emissions (i.e., an amplitude of sound waves) received by acoustic receptor 302. Such acoustic emissions may be generated by wind turbines 100 and/or by any other source positioned within a detection zone 308 of acoustic sensors 304.

Moreover, in the exemplary embodiment, each acoustic receptor 302 filters out acoustic emissions received from sources other than wind turbines 100 such that only acoustic emissions generated by wind turbines 100 are stored and/or processed by acoustic receptor 302.

In the exemplary embodiment, detection zone 308 is an area centered about acoustic receptor 302 in which acoustic emissions generated within detection zone 308 are detected by acoustic sensor 304. Detection zones 308, in the exemplary embodiment, are determined for each acoustic receptor 302 during a wind farm installation and/or during any other suitable time period, and are stored within a lookup table or another data construct within a memory device (not shown) positioned within acoustic receptor 302. Moreover, in the exemplary embodiment, detection zones 308 are determined and/or are updated to encompass wind turbines 100 that generate acoustic emissions exceeding a minimum acoustic threshold. In one embodiment, detection zones 308 overlap such that a wind turbine 100 is positioned within detection zones 308 of a plurality of acoustic receptors 302.

In the exemplary embodiment, depending on a relative position of each acoustic receptor 302 and each wind turbine 100 within wind farm 300, each acoustic sensor 304 receives and/or measures acoustic emissions generated by a plurality of wind turbines 100. Acoustic receptors 302 compare the amplitudes of the received acoustic emissions from wind turbines 100 to a predetermined penalty threshold. In the exemplary embodiment, the penalty threshold is determined by a government, an organization, and/or any other entity. Moreover, the penalty threshold represents a level of acoustic emissions authorized to be generated and/or deemed to be acceptable within wind farm 300 and/or another suitable area without a penalty being assessed. In the exemplary embodiment, the penalty threshold is based on the amplitude of one or more acoustic emissions and/or based on an average or sustained level of acoustic emissions received over a predetermined period of time.

If the amplitudes of the received acoustic emissions exceed the penalty threshold, acoustic receptor 302 transmits a penalty notification to wind turbines 100. The penalty notification, in the exemplary embodiment, includes a penalty to be assessed to the operator of wind farm 300 and/or to any other suitable person. Moreover, in the exemplary embodiment, the penalty increases linearly or nonlinearly as the acoustic emission amplitudes increase above the penalty threshold. In an alternative embodiment, a penalty notification may be generated if prior acoustic emissions have exceeded the penalty threshold by a predetermined amount and/or for a predetermined amount of time, even if the current acoustic emissions are below the penalty threshold. In such an embodiment, a penalty may still be assessed, but the penalty amount may be reduced linearly or nonlinearly based on the amount of time that has elapsed since the penalty threshold has been exceeded, based on the amount that the acoustic emissions are below the penalty threshold, and/or based on any other suitable criteria. As such, the penalty and/or the penalty notification may be updated over time, such as continuously, periodically, and/or intermittently updated. Moreover, in one embodiment, the penalty threshold may be updated or modified during operation of wind farm 300 and/or wind turbine 100.

In the exemplary embodiment, the penalty is determined or calculated within acoustic receptor 302 based on the acoustic emissions received. Alternatively, acoustic receptor 302 may transmit signals representative of the amount of acoustic emissions received to any other system or device for use in determining or calculating the penalty to be assessed. As used herein in the exemplary embodiment, the term "penalty" refers to a monetary amount assessed as a result of acoustic emissions exceeding the penalty threshold. Alternatively, a "penalty" may be an amount of power generation that must be reduced by wind turbines 100 and/or wind farm 300 as a result of acoustic emissions exceeding the penalty threshold, and/or any other quantity that enables wind farm 300 to function as described herein. As described more fully herein in the exemplary embodiment, wind turbines 100 optimize a power generation and/or an acoustic emission generation based on the penalty notification received. Alternatively, wind turbines 100 optimize the power generation and/or the acoustic emission generation based on an expected penalty notification and/or based on a notification of a penalty expected to be assessed. As such, wind turbines 100 may receive a notification of a penalty expected to be assessed if a current level of acoustic emissions is maintained, and wind turbines 100 may adjust or optimize the power generation and/or acoustic emission generation to reduce and/or cause the expected penalty to be modified.

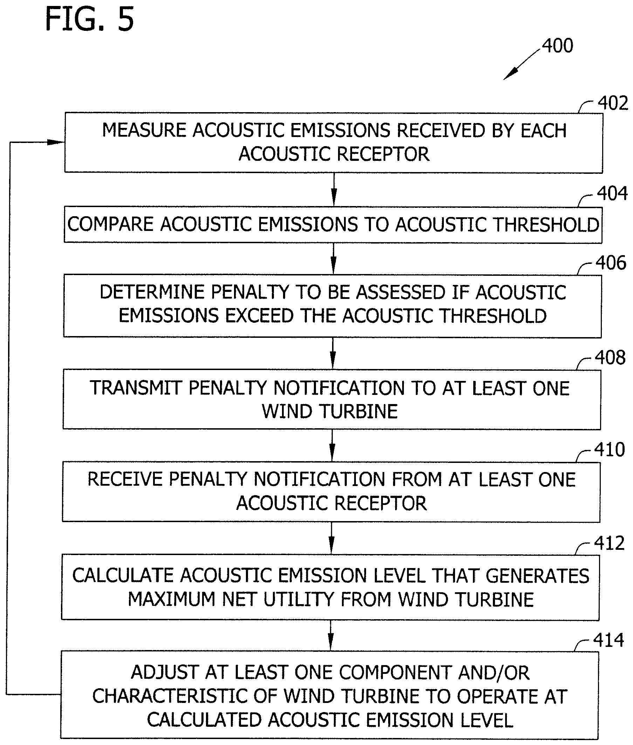

Fig. 5 is a flow diagram of an exemplary method 400 of optimizing an operation of at least one wind turbine, such as wind turbine 100 (shown in Fig. 1). In one embodiment, method 400 may be at least partially executed by a wind farm server or another computer system (not shown). In the exemplary embodiment, method 400 is at least partially executed by turbine control system 150 (shown in Fig. 2) of each wind turbine 100 within wind farm 300 (shown in Fig. 4). As such, in the exemplary embodiment, method 400 is at least partially executed as a distributed algorithm using turbine control systems 150 of a plurality of wind turbines 100 within wind farm 300.

In the exemplary embodiment, method 400 measures 402 acoustic emissions received by acoustic receptor 302 (shown in Fig. 4). For example, in the exemplary embodiment, each acoustic receptor 302 measures 402 acoustic emissions received from wind turbines 100 positioned within detection zone 308 (shown in Fig. 4). Alternatively, wind turbines 100 may measure acoustic emissions generated by each wind turbine 100 and transmit an acoustic emission measurement signal to acoustic receptor 302. Moreover, acoustic receptor 302 compares 404 the acoustic emissions to a predetermined acoustic threshold. If the acoustic emissions exceed the acoustic threshold, acoustic receptor 302 determines 406 a penalty to be assessed based on the acoustic emissions. In the exemplary embodiment, the penalty is updated if the acoustic emissions change.

In the exemplary embodiment, the penalty is an economic (i.e., monetary) amount assessed to wind turbines 100 within detection zone 308. Alternatively, the penalty may be represented in units of annual energy production (AEP) such that the penalty is accounted against the amount of power generated by each wind turbine 100 within detection zone 308 for use in determining the AEP of each wind turbine 100. Moreover, in the exemplary embodiment, each acoustic receptor 302 transmits 408 a penalty notification identifying the penalty to at least one wind turbine 100, such as each wind turbine 100 positioned within detection zone 308, if the acoustic emissions received by acoustic receptor 302 exceed the acoustic threshold.

Each wind turbine 100, in the exemplary embodiment, receives 410 a penalty notification from at least one acoustic receptor 302. Moreover, in the exemplary embodiment, each wind turbine 100 receives 410 one or more penalty notifications from each acoustic receptor 302 that has a detection zone 308 encompassing wind turbine 100. Each wind turbine 100 calculates 412 an acoustic emission level that generates a maximum net utility from wind turbine 100. As used herein, the term "net utility" refers to an amount of power generated by wind turbine 100 (e.g., the AEP of wind turbine 100) and/or an economic value attributed to wind turbine 100 based on the amount of power generated by wind turbine 100 (e.g., the AEP of wind turbine multiplied by a cost of energy). The net utility incorporates at least a portion of the penalty received 410 from acoustic receptors 302. More specifically, in the exemplary embodiment, wind turbine 100 determines and/or estimates the portion of each penalty attributable to the acoustic emissions generated by wind turbine 100, for example, by referencing an acoustic model stored within turbine control system 150. Alternatively, the acoustic model may be stored in, and/or updated by, one or more remote systems and/or may be based on measurements received from, and/or stored within, one or more systems. Accordingly, the net utility of each wind turbine 100 includes the portion of each penalty attributable to the acoustic emissions generated by wind turbine 100 subtracted from the overall AEP or economic value of wind turbine 100.

In the exemplary embodiment, each wind turbine 100 calculates the maximum net utility of wind turbine 100 by solving an optimization algorithm, such as Eq. 1:

$$f_i(x_i) - \sum_{j=1}^{M} P_j * n_{ij}(x_i) \qquad \text{(Eq. 1)}$$

wherein $j$ is an index of an acoustic receptor 302, $i$ is an index of a wind turbine 100 within detection zone 308 of acoustic receptor 302, and $f_i(x_i)$ is the AEP or the economic value or output of wind turbine 100 as a function of the acoustic emission level $x_i$ of wind turbine 100. $P_j$ is the penalty assessed by acoustic receptor 302, and $n_{ij}(x_i)$ is the measured acoustic emission level at acoustic receptor 302 due to wind turbine 100 as a function of the acoustic emission $x_i$ of wind turbine 100. In the exemplary embodiment, the acoustic emission level at acoustic receptor 302 due to wind turbine 100 is calculated and/or determined by referencing an acoustic emission model and/or a lookup table stored within turbine control system 150.

In the exemplary embodiment, turbine control system 150 solves the optimization algorithm by selecting a desired acoustic emission level $x_i$ to be generated by wind turbine 100 that maximizes the resultant value of Eq. 1. More specifically, in the exemplary embodiment, turbine control system 150 selects an acoustic emission level $x_i$ that maximizes

a difference between the AEP or economic value or output of wind turbine 100 and the sum of the penalties $P_j$ attributable to wind turbine 100. Moreover, in the exemplary embodiment, turbine control system 150 solves the optimization algorithm using a gradient solver. Alternatively, turbine control system 150 solves the optimization algorithm using any suitable solver or method.

In the exemplary embodiment, turbine control system 150 adjusts 414 at least one component and/or characteristic of wind turbine 100 to operate at the calculated or desired acoustic emission level. More specifically, in the exemplary embodiment, turbine control system 150 operates actuators 206 (shown in Fig. 3) to adjust a pitch angle of rotor blades 112 and/or a yaw angle of nacelle 106 (both shown in Fig. 1) to increase or decrease the power generated by wind turbine 100. Because power generation is proportional to the acoustic emission level of wind turbine 100, increasing or decreasing the power generated by wind turbine 100 increases or decreases the acoustic emission level of wind turbine 100. After at least one component and/or characteristic of wind turbine 100 has been adjusted 414 to operate at the desired acoustic emission level, method 400 returns to measuring 402 the acoustic emissions received by each acoustic receptor 302.

In the exemplary embodiment, steps 402, 404, 406, and 408 of method 400 are executed by each acoustic receptor 302 within wind farm 300, and steps 410, 412, and 414 of method 400 are executed by each wind turbine 100 within wind farm 300. More specifically, in the exemplary embodiment, steps 410, 412, and 414 are executed by processor 200 of turbine control system 150 within each wind turbine 100 of wind farm 300. Alternatively, any step of method 400 may be executed by any suitable device or system that enables method 400 to function as described herein.

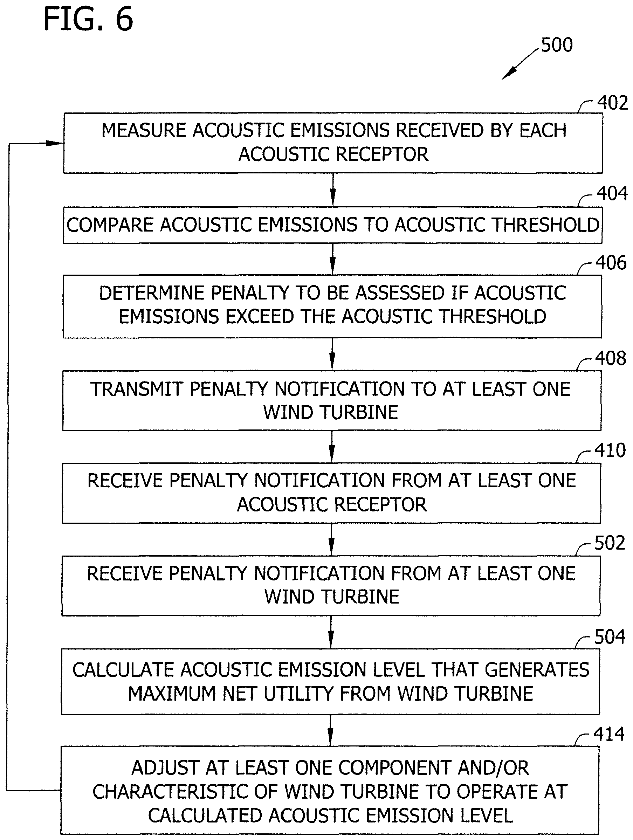

Fig. 6 is a flow diagram of an exemplary method 500 of optimizing an operation of a first wind turbine, such as wind turbine 100 (shown in Fig. 1). In the exemplary embodiment, method 500 is substantially similar to method 400 (shown in Fig. 5), and similar steps of method 500 are labeled with the same reference numerals as the steps of method 400. As such, method 500 includes steps 402, 404, 406, 408, and 410 as described more fully with respect to Fig. 5.

In the exemplary embodiment, method 500 is executed on a first wind turbine 100 of a plurality of wind turbines 100 within wind farm 300 (shown in Fig. 3). First wind turbine 100 is positioned upstream of a second wind turbine 100 such that second wind turbine 100 is positioned within a wake zone of first wind turbine 100. In the exemplary embodiment, a wake effect caused by first wind turbine 100 undesirably affects the loading induced to second wind turbine 100. As used herein, the term "wake effect" refers to a turbulence or loading induced to a downstream wind turbine 100 positioned within a wake zone of an upstream wind turbine 100. Moreover, as used herein, the term "wake zone" refers to an area of increased turbulence downstream from a wind turbine 100 that may be caused by an interaction of rotor blades 112 with wind flowing past wind turbine 100. It should be understood that as a wind direction and/or a rotation of rotor blades 112 changes, an orientation and/or a size of a wake zone may also change. Moreover, in certain conditions, a plurality of upstream wind turbines 100 may generate one or more wake zones that individually or together affect one or more downstream wind turbines 100.

First wind turbine 100, in the exemplary embodiment, receives 502 a load penalty notification from at least one wind turbine 100, such as second wind turbine 100. In one embodiment, first wind turbine 100 receives 502 a load penalty notification from a plurality of wind turbines 100 positioned within the wake zone of first wind turbine 100. As used herein, the term "load penalty" refers to a monetary amount and/or a power generation reduction amount assessed to and/or accounted against a wind turbine 100 as a result of a wake effect induced to wind turbine 100.

In the exemplary embodiment, an acoustic emission level is calculated 504 that generates a maximum net utility from first wind turbine 100. In the exemplary embodiment, the desired acoustic emission level of first wind turbine 100 is calculated 504 by solving an optimization algorithm, such as Eq. 2, to maximize the net utility of first wind turbine 100:

$$f_k(x_k) + \frac{\partial f_i}{\partial x_k} * x_k - Q_i * \frac{\partial L_i}{\partial x_k} * x_k - \sum_{j=1}^{M} P_j * n_{kj}(x_k) \qquad \text{(Eq. 2)}$$

wherein j is an index of an acoustic receptor 302, $k$ is an index of first wind turbine 100 positioned within detection zone 308 of acoustic receptor 302, i is an index of second wind turbine 100 positioned within a wake zone of first wind turbine 100, and $f_k(x_k)$ is the AEP or economic value or output of first wind turbine 100 as a function of the acoustic emission level $x_k$ of first wind turbine 100. The term $\partial f_i / \partial x_k * x_k$ represents the change in, or incremental AEP or economic value or output of second wind turbine 100 due to the wake effect of first wind turbine 100 as a function of the operation of first wind turbine 100 at the acoustic emission level $x_k$. The term $Q_i$ represents a load penalty communicated to first wind turbine 100 from second wind turbine 100, and $L_i$ represents the mechanical load on second wind turbine 100. As such, the term $Q_i * \partial L_i / \partial x_k * x_k$ represents the penalty due to the additional load induced to second wind turbine 100 as a result of the wake induced to second wind turbine 100 by first wind turbine 100.

The term $P_j$ represents the penalty assessed by acoustic receptor 302, and $n_{kj}(x_k)$ represents the measured acoustic emission level at acoustic receptor 302 due to first wind turbine 100 as a function of the acoustic emission $x_k$ of first wind turbine 100. In the exemplary embodiment, the acoustic emission level at acoustic receptor 302 due to first wind turbine 100 is calculated and/or determined by referencing an acoustic emission model and/or a lookup table stored within turbine control system 150. Accordingly, the term $\Sigma\, P_j * n_{kj}\, (x_k)$ represents the sum of penalties due to acoustic emissions of first wind turbine 100 received by each acoustic receptor 302.

In the exemplary embodiment, first wind turbine 100 selects a value of $x_k$ that maximizes Eq. 2 and communicates the value to second wind turbine 100 for use in determining the optimal acoustic emission $x_i$ of second wind turbine 100. More specifically, in the exemplary embodiment, first wind turbine 100 selects an acoustic emission level $x_k$ that maximizes a difference between the AEP or economic value or output of first wind turbine 100 and the sum of the load penalties $Q_i$ and/or acoustic emission penalties $P_j$ attributable to first wind turbine 100. At least one component and/or characteristic of first wind turbine 100 is adjusted 414 to operate at the desired or calculated acoustic emission level in a similar manner as described above with reference to Fig. 5. In one embodiment, second wind turbine 100 updates the loading penalty based on the adjusted 414 operation of first wind turbine 100 (i.e., based on a change in the loading induced to second wind turbine 100 as a result of the operation of first wind turbine 100 at the adjusted acoustic emission level). After at least one component and/or characteristic of wind turbine 100 has been adjusted 414 to operate at the desired acoustic emission level, method 500 returns to measuring 402 the acoustic emissions received by each acoustic receptor 302.

In the exemplary embodiment, steps 402, 404, 406, and 408 of method 500 are executed by each acoustic receptor 302 within wind farm 300, and steps 410, 414 of method 500 are executed by each wind turbine 100 within wind farm 300. More specifically, in the exemplary embodiment, steps 410, 414, 502, and 504 are executed by processor 200 of turbine control system 150 within each wind turbine 100 of wind farm 300. Alternatively, any step of method 500 may be executed by any suitable device or system that enables method 500 to function as described herein.

While method 400 and method 500 are described herein as relating to wind turbines 100 and acoustic receptors 302 within wind farm 300, it should be recognized that method 400 and/or method 500 may also be executed among wind turbines 100 and/or acoustic receptors 302 of a plurality of wind farms 300.

Moreover, in one embodiment, method 400 and/or method 500 may optimize the operation of one or more wind turbines 100 based on an operational status of one or more wind turbines 100. For example, in one embodiment, an underperforming wind turbine 100 or a wind turbine 100 that has experienced a higher amount of loading and/or fatigue than other wind turbines 100 may be given a preference to operate at lower acoustic emission levels and/or power levels to extend an operational life of wind turbine 100 while determining the optimal acoustic emission levels, AEP, and/or economic output of wind turbine 100. Moreover, during a period of power curtailment, such as a period of power curtailment imposed by an electrical grid, a preference may be given to wind turbines 100 closer to acoustic receptors 302 to reduce the amount of acoustic emissions received by receptors 302. Furthermore, if one or more wind turbines 100 are shut down or disabled, for example, for maintenance purposes, acoustic emission levels and/or power levels of active wind turbines 100 may be increased to accommodate for the power loss of the disabled wind turbine 100, while still meeting acoustic emission constraints and/or optimizing the acoustic emission levels generated by the active wind turbines 100.

A technical effect of certain of the systems and methods described herein may include at least one of: (a) receiving at least one penalty notification identifying an assessed penalty based on an acoustic emission generated by at least one wind turbine; (b) calculating an acoustic emission level to be generated by at least one wind turbine based on the penalty and based on at least one of a power generated by the at least one wind turbine and an economic value attributed to the at least one wind turbine; and (c) adjusting at least one characteristic of at least one wind turbine to cause the at least one wind turbine to be operated at a calculated acoustic emission level.

Various of the above-described embodiments can provide an efficient and robust method of optimizing the operation of a wind turbine. An acoustic receptor measures acoustic emissions received from one or more wind turbines and compares the acoustic emissions to a threshold. If the threshold is exceeded, a penalty is assessed and transmitted to the wind turbines within a detection zone of the acoustic receptor. Each wind turbine within the detection zone receives the penalty and calculates an optimal acoustic emission level to be generated by the wind turbine to maximize a net utility of the wind turbine. Moreover, additional loading induced to downstream wind turbines may be factored into the optimal acoustic emission level calculation to account for loading penalties associated with wake effects. Accordingly, the methods described herein enable the wind turbines within a wind farm to operate at an optimal economic output with respect to acoustic emission and/or loading penalties.

Exemplary embodiments of a control system, a wind farm, and methods of optimizing the operation of a wind turbine are described above in detail. The control system, wind farm, and methods are not limited to the specific embodiments described herein, but rather, components of the control system and/or wind farm and/or steps of the methods may be utilized independently and separately from other components and/or steps described herein. For example, the methods may also be used in combination with other power, fluid, and control systems, and is not limited to practice with only the wind farm and control system as described herein. Rather, the exemplary embodiment can be implemented and utilized in connection with many other power system applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims.

**Claims**

1. A control system (150) for a wind turbine (100), the wind turbine (100) configured to generate an acoustic emission during operation, said control system (150) comprising:

   a communication device (208) configured to receive at least one penalty notification identifying a penalty to be assessed based on the acoustic emission generated, wherein the penalty is represented in units of annual energy production (AEP) or is an economic amount assessed to the wind turbine (100), and
   a processor (200) coupled to said communication device, said processor (200) configured to:

   calculate (412) an acoustic emission level ($x_i$) to be generated by the wind turbine (100) based

   on the penalty and
   based on at least one of a power generated by wind turbine and an economic value attributed to the wind turbine,
   while maximizing a difference between the output power or the economic value of the wind turbine (100), and the penalty such that a maximum net utility of the wind turbine (100) is generated, wherein the net utility is an amount of power generated by wind turbine 100 and/or an economic value attributed to wind turbine (100) based on the amount of power generated by wind turbine (100); and

   adjust (414) at least one characteristic of the wind turbine to cause the wind turbine to operate at the calculated acoustic emission level ($x_i$).

2. The control system (150) in accordance with any preceding claim, wherein the maximum net utility is calculated (412) by solving an optimization algorithm.

3. The control system (150) in accordance with claim 2, wherein the optimization algorithm is:

$$f_i(x_i) - \sum_{j=1}^{M} P_j \ast n_{ij}(x_i)$$

   wherein $j$ is an index of an acoustic receptor (302), $i$ is an index of the wind turbine 100) within a detection zone (308) of the acoustic receptor (302), and $f_i(x_i)$ is the AEP or the economic value or output of the wind turbine (100) as a function of the acoustic emission level $x_i$ of the wind turbine (100), $P_j$ is the penalty assessed by acoustic receptor (302), and $n_{ij}(x_i)$ is the measured acoustic emission level at the acoustic receptor (302) due to the wind turbine (100) as a function of the acoustic emission $x_i$ of the wind turbine (100).

4. The control system (150) in accordance with any preceding claim, wherein each acoustic receptor (302) filters out acoustic emissions received from sources other than wind turbines.

5. The control system (150) in accordance with any preceding claim, wherein said communication device (208) is configured to receive at least a penalty notification from at least two of a plurality of acoustic receptors (302), each penalty notification identifying a penalty to be assessed based on the acoustic emission generated by the wind turbine (100).

6. The control system (150) in accordance with any preceding claim, wherein said processor (200) is configured to calculate an acoustic emission level to be generated by the wind turbine (100) based on each penalty received and based on at least one of a power generated by the wind turbine and an economic value attributed to the wind turbine.

7. The control system (150) in accordance with any preceding claim, wherein the wind turbine (100) is a first wind turbine of a plurality of wind turbines, the penalty is based on an acoustic emission of each of the plurality of wind turbines, and wherein said processor (200) identifies a portion of the penalty attributable to the acoustic emission generated by the first wind turbine.

8. The control system (150) in accordance with any preceding claim, wherein said processor (200) identifies a portion of the penalty attributable to the acoustic emission generated by the first wind turbine (100) by referencing an acoustic model.

9. The control system (150) in accordance with any preceding claim, wherein the wind turbine (100) is a first wind turbine of a plurality of wind turbines, wherein said processor (200) is configured to calculate an acoustic emission level to be generated by the wind turbine based on a loading induced to a second wind turbine of the plurality of wind turbines.

10. A wind farm (300) comprising:

　　at least one acoustic receptor (302) configured to:

　　　　measure an acoustic emission generated within said wind farm; and
　　　　generate a penalty notification identifying a penalty to be assessed based on the measured acoustic emission, wherein the penalty is represented in units of annual energy production (AEP) or is an economic amount assessed to the wind turbine (100); and

　　a plurality of wind turbines (100), wherein a first wind turbine of said plurality of wind turbines comprises: a control system (150) as defined in any preceding claim.

11. The wind farm (300) in accordance with Claim 10, wherein said at least one acoustic receptor (302) is configured to:

　　measure acoustic emissions from at least two of said plurality of wind turbines (100); and
　　generate at least one penalty notification identifying a penalty to be assessed based on the measured acoustic emissions.

12. A wind farm (300) in accordance with claim 10 or claim 11, wherein said processor (200) is configured to calculate the acoustic emission level that maximizes a difference between the penalty and the at least one of a power generated by said first wind turbine (100) and an economic lvalue attributed to said first wind turbine.

13. The wind farm (300) in accordance with any of claims 10 to 12, wherein a desired acoustic emission level of a first wind turbine (100) is calculated (504) by solving the optimization algorithm:

$$f_k(x_k) + \frac{\partial f_i}{\partial x_k} * x_k - Q_i * \frac{\partial L_i}{\partial x_k} * x_k - \sum_{j=1}^{M} P_j * n_{kj}(x_k).$$

　　wherein j is an index of an acoustic receptor (302), $k$ is an index of the first wind turbine (100) positioned within detection zone (308) of the acoustic receptor (302), i is an index of a second wind turbine (100) positioned within a wake zone of first wind turbine (100), and $f_k(x_k)$ is the AEP or economic value or output of the first wind turbine (100) as a function of the acoustic emission level $x_k$ of the first wind turbine (100).

14. A method of optimizing the operation of at least one wind turbine (100) configured to generate an acoustic emission during operation having a control system (150) according to one of the claims 1 to 9, said method comprising:

　　receiving at least one penalty notification identifying an assessed penalty based on an acoustic emission generated by the at least one wind turbine (100);
　　calculating (412) the acoustic emission level ($x_i$) to be generated by the wind turbine (100) based on the penalty and based on at least one of a power generated by wind turbine and an economic value,
　　while maximizing the difference between the output power or the economic value of the wind turbine (100), and the penalty attributable to the wind turbine (100) such that a maximum net utility of the wind turbine (100) is generated; and adjusting (414) at least one characteristic of the wind turbine to cause the wind turbine to operate at the calculated acoustic emission level (xi).

**Patentansprüche**

1. Steuerungssystem (150) für eine Windturbine (100), wobei die Windturbine (100) derart konfiguriert ist, um eine akustische Emission während des Betriebs zu erzeugen, wobei das Steuerungssystem (150) folgendes aufweist:

   eine zum Empfang einer Sanktionsmitteilung ausgebildete Kommunikationsvorrichtung (208), wobei die Sanktionsmitteilung eine Sanktion identifiziert, die auf Basis der erzeugten akustischen Emission bemessen ist, wobei die Sanktion in Form von Einheiten einer jährlichen Energieproduktion (AEP) repräsentiert ist oder ein wirtschaftlicher der Windturbine (100) zugeordneter Wert ist; und
   einen mit der Kommunikationsvorrichtung verbundener Prozessor (200), wobei der Prozessor (200) zu Folgendem ausgebildet ist:

   Berechnen (412) eines von der Windturbine (100) zu erzeugenden Schallemissionspegels ($x_i$) basierend auf

   der Sanktion und
   basierend auf mindestens einer von einer Windturbine erzeugten Leistung und auf einem der Windturbine zugeschriebenen wirtschaftlichen Wert, wobei eine Differenz zwischen der Ausgangsleistung oder dem wirtschaftlichen Wert der Windturbine (100) und der Sanktion maximiert wird, so dass ein maximaler Nettonutzen der Windturbine (100) erzeugt wird, wobei der Nettonutzen eine von der Windturbine (100) erzeugte Energiemenge und/oder ein wirtschaftlicher Wert ist, der der Windturbine (100) auf der Grundlage der von der Windturbine (100) erzeugten Energiemenge zugeordnet wird; und

   Einstellen (414) mindestens einer Eigenschaft der Windturbine, um zu bewirken, dass die Windturbine mit dem berechneten Schallemissionspegel ($x_i$) betrieben wird.

2. Steuerungssystem (150) nach voranstehendem Anspruch, wobei der maximale Nettonutzen durch Lösen eines Optimierungsalgorithmus berechnet wird (412).

3. Steuerungssystem (150) nach Anspruch 2, wobei der Optimierungsalgorithmus wie folgt lautet:

$$f_i(x_i) - \sum_{j=1}^{M} P_j * n_{ij}(x_i)$$

   wobei j ein Index eines akustischen Empfängers (302) ist, i ein Index der Windturbine (100) innerhalb einer Erfassungszone (308) des akustischen Empfängers (302) ist, und $f_i(x_i)$ der AEP oder der wirtschaftliche Wert oder die elektrische Leistung der Windturbine (100) als eine Funktion des Schallemissionspegels $x_i$ der Windturbine (100) ist, $P_j$ die vom akustischen Empfänger (302) bemessene Sanktion ist, und $n_{ij}(x_i)$ der am akustischen Empfänger (302) gemessene, durch die Windturbine (100) erzeugte Schallemissionspegel ist, Letzterer dargestellt als Funktion der Schallemission $x_i$ der Windturbine (100).

4. Steuerungssystem (150) nach einem der voranstehenden Ansprüche, wobei jeder akustische Empfänger (302) akustische Emissionen herausfiltert, die von anderen Quellen als von Windturbinen herrühren.

5. Steuerungssystem (150) nach einem der voranstehenden Ansprüche, wobei die Kommunikationsvorrichtung (208) derart ausgebildet ist, um mindestens eine Sanktionsmitteilung von mindestens zwei aus einer Vielzahl von akustischen Empfängern (302) zu erhalten, wobei jede Sanktionsmitteilung eine Sanktion identifiziert, die auf der Grundlage der von der Windturbine (100) erzeugten akustischen Emission zu bemessen ist.

6. Steuerungssystem (150) nach einem der voranstehenden Ansprüche, wobei der Prozessor (200) derart konfiguriert ist, um einen von der Windturbine (100) erzeugten Schallemissionspegel zu berechnen, basierend auf jeder erhaltenen Sanktion und auf einer von einer von der Windturbine erzeugten Leistung und einem der Windturbine zugeordneten wirtschaftlichen Wert.

7. Steuerungssystem (150) nach einem der voranstehenden Ansprüche, wobei die Windturbine (100) eine erste Windturbine einer Vielzahl von Windturbinen ist, die Sanktion auf einer Schallemission von jeder der Vielzahl von Windturbinen basiert und wobei der Prozessor (200) einen Anteil der Sanktion identifiziert, der der Schallemission zugeordnet werden kann, welche von der ersten Windturbine erzeugt wird.

8. Steuerungssystem (150) nach einem der voranstehenden Ansprüche, wobei der Prozessor (200) einen Anteil der Sanktion identifiziert, der der von der ersten Windturbine (100) erzeugten Schallemission zuzuschreiben ist, indem auf ein akustisches Modell Bezug genommen wird.

9. Steuerungssystem (150) nach einem der voranstehenden Ansprüche, wobei die Windturbine (100) eine erste Windturbine aus einer Vielzahl von Windturbinen ist, wobei der Prozessor (200) derart konfiguriert ist, um einen von der Windturbine zu erzeugenden Schallemissionspegel basierend auf einer Beanspruchung zu berechnen, die bei einer zweiten Windturbine aus der Vielzahl von Windturbinen induziert wird.

10. Windpark (300) aufweisend:

mindestens einen akustischen Empfänger (302), der zu Folgendem konfiguriert ist:

Messen einer innerhalb des Windparks erzeugten akustischen Emission; und
Erzeugen einer Sanktionsmitteilung, wobei die Sanktionsmitteilung eine Sanktion identifiziert, die auf Basis der erzeugten akustischen Emission bemessen ist, wobei die Sanktion in Form von Einheiten einer jährlichen Energieproduktion (AEP) repräsentiert ist oder ein wirtschaftlicher der Windturbine (100) zugeordneter Wert ist; und

eine Mehrzahl von Windturbinen (100), wobei eine erste Windturbine der Mehrzahl von Windturbinen ein Steuerungssystem (150) nach einem der voranstehenden Ansprüche aufweist.

11. Windpark (300) nach Anspruch 10, wobei der wenigstens eine akustische Empfänger (302) zu Folgendem ausgebildet ist:

Messen einer akustischen Emission von mindestens zwei der Vielzahl von Windturbinen (100); und
Erzeugen von mindestens einer Sanktionsmitteilung, die eine anhand der gemessenen akustischen Emissionen bemessene Sanktion identifiziert.

12. Windpark (300) nach Anspruch 10 oder 11, wobei der Prozessor (200) dazu ausgebildet ist, um den Schallemissionspegel zu berechnen, der eine Differenz zwischen der Sanktion und mindestens einer von einer von der ersten Windturbine (100) erzeugten Leistung und einem der ersten Windturbine zugeordneten wirtschaftlichen Wert maximiert.

13. Windpark (300) nach einem der Ansprüche 10 bis 12 Anspruch, wobei ein angestrebter Schallemissionspegel einer ersten Windturbine (100) durch Lösen des folgenden Optimierungsalgorithmus berechnet wird:

$$f_k(x_k) + \frac{\partial f_i}{\partial x_k} * x_k - Q_i * \frac{\partial L_i}{\partial x_k} * x_k - \sum_{j=1}^{M} P_j * n_{kj}(x_k).$$

wobei j ein Index eines akustischen Empfängers (302) ist, k ein Index der ersten Windturbine (100) ist, die innerhalb einer Erfassungszone (308) des akustischen Empfängers (302) positioniert ist, i ein Index einer zweiten Windturbine (100) ist, die innerhalb einer Wirbelschleppzone der ersten Windturbine (100) positioniert ist, und $f_k(x_k)$ der AEP oder der wirtschaftliche Wert oder die Leistung der ersten Windturbine (100) als eine Funktion des Schallemissionspegels $x_k$ der ersten Windturbine (100) ist.

14. Verfahren zum Optimieren eines Betriebs von mindestens einer Windturbine (100), die zum Erzeugen einer akustischen Emission während des Betriebs ausgebildet ist, und die ein Steuerungssystem (150) nach einem der Ansprüche 1 bis 9 aufweist, wobei das Verfahren die folgenden Schritte aufweist:

Empfang mindestens einer Sanktionsmitteilung, die eine auf einer durch die Windturbine (100) erzeugten akustischen Emission basierenden Sanktion identifiziert;
Berechnen (412) des von der Windturbine (100) erzeugten Schallemissionspegels ($x_i$), basierend auf der Sanktion und basierend mindestens auf der von der Windturbine erzeugten Leistung und einem wirtschaftlichen Wert,

wobei eine Differenz zwischen der Ausgangsleistung oder dem wirtschaftlichen Wert der Windturbine (100) und der Sanktion maximiert wird, so dass ein maximaler Nettonutzen der Windturbine (100) erzeugt wird; und Einstellen (414) mindestens einer Eigenschaft der Windturbine, um zu bewirken, dass die Windturbine mit dem berechneten Schallemissionspegel (xᵢ) betrieben wird.

**Revendications**

1. Système de commande (150) pour une éolienne (100), l'éolienne (100) étant configurée pour générer une émission sonore pendant le fonctionnement, ledit système de commande (150) comprenant :

un dispositif de communication (208) configuré pour recevoir au moins une notification de pénalité identifiant une pénalité à évaluer sur la base de l'émission sonore générée, dans lequel la pénalité est représentée en unités de production d'énergie annuelle (PEA) ou est une quantité économique évaluée pour l'éolienne (100), et un processeur (200) couplé audit dispositif de communication, ledit processeur (200) étant configuré pour :

calculer (412) un niveau d'émission sonore ($x_i$) à générer par l'éolienne (100) sur la base de la pénalité et
sur la base d'au moins un parmi un courant généré par une éolienne et une valeur économique attribuée à l'éolienne,

tout en maximisant la différence entre la puissance de sortie ou la valeur économique de l'éolienne (100), et la pénalité de façon à générer une fonctionnalité nette maximale de l'éolienne (100), dans lequel la fonctionnalité nette représente une quantité de puissance générée par l'éolienne 100 et/ou une valeur économique attribuée à l'éolienne (100) sur la base de la quantité de puissance générée par l'éolienne (100) ; et
ajuster (414) au moins une caractéristique de l'éolienne pour amener l'éolienne à fonctionner au niveau d'émission sonore ($x_i$) calculé.

2. Système de commande (150) selon l'une quelconque des revendications précédentes, dans lequel la fonctionnalité nette maximale est calculée (412) en résolvant un algorithme d'optimisation.

3. Système de commande (150) selon la revendication 2, dans lequel l'algorithme d'optimisation est :

$$f_i(x_i) - \sum_{j=1}^{M} P_j * n_{ij}(x_i)$$

dans lequel $j$ est un indice d'un récepteur sonore (302), $i$ est un indice de l'éolienne 100) dans une zone de détection (308) du récepteur sonore (302), et $f_i(x_i)$ est égal à la PEA ou à la valeur économique ou à la puissance de l'éolienne (100) en fonction du niveau d'émission sonore $x_i$ de l'éolienne (100), $P_j$ est la pénalité évaluée par le récepteur sonore (302) et $n_{ij}(x_i)$ est le niveau d'émission sonore mesuré au niveau du récepteur sonore (302) dû à l'éolienne (100) en fonction de l'émission sonore $x_i$ de l'éolienne (100).

4. Système de commande (150) selon l'une quelconque des revendications précédentes, dans lequel chaque récepteur sonore (302) filtre les émissions sonores reçues de sources différentes des éoliennes.

5. Système de commande (150) selon l'une quelconque des revendications précédentes, dans lequel ledit dispositif de communication (208) est configuré pour recevoir au moins une notification de pénalité d'au moins deux d'une pluralité de récepteurs sonores (302), chaque notification de pénalité identifiant une pénalité à évaluer sur la base de l'émission sonore générée par l'éolienne (100).

6. Système de commande (150) selon l'une quelconque des revendications précédentes, dans lequel ledit processeur (200) est configuré pour calculer un niveau d'émission sonore à générer par l'éolienne (100) sur la base de chaque pénalité reçue et sur la base d'au moins l'une d'une puissance générée par l'éolienne et d'une valeur économique attribuée à l'éolienne.

7. Système de commande (150) selon l'une quelconque des revendications précédentes, dans lequel l'éolienne (100) est une première éolienne d'une pluralité d'éoliennes, la pénalité est basée sur une émission sonore de chacune de la pluralité d'éoliennes, et dans lequel ledit processeur (200) identifie une partie de la pénalité imputable à l'émission sonore générée par la première éolienne.

8. Système de commande (150) selon l'une quelconque des revendications précédentes, dans lequel ledit processeur (200) identifie une partie de la pénalité imputable à l'émission sonore générée par la première éolienne (100) en faisant référence à un modèle sonore.

9. Système de commande (150) selon l'une quelconque des revendications précédentes, dans lequel l'éolienne (100) est une première éolienne d'une pluralité d'éoliennes, dans lequel ledit processeur (200) est configuré pour calculer un niveau d'émission sonore à générer par l'éolienne sur la base d'un chargement induit sur une deuxième éolienne de la pluralité d'éoliennes.

10. Parc éolien (300), comprenant :

   au moins un récepteur sonore (302) configuré pour :

   mesurer une émission sonore générée à l'intérieur dudit parc éolien ; et
   générer une notification de pénalité identifiant une pénalité à évaluer sur la base de l'émission sonore mesurée, dans lequel la pénalité est représentée en unités de production d'énergie annuelle (PEA) ou est une quantité économique évaluée au niveau de l'éolienne (100) ; et

   une pluralité d'éoliennes (100), dans lequel une première éolienne de ladite pluralité d'éoliennes comprend :
   un système de commande (150) selon l'une quelconque des revendications précédentes.

11. Parc éolien (300) selon la revendication 10, dans lequel ledit au moins un récepteur sonore (302) est configuré pour :

   mesurer des émissions sonores à partir d'au moins deux de ladite pluralité d'éoliennes (100) ; et
   générer au moins une notification de pénalité identifiant une pénalité à évaluer sur la base des émissions sonores mesurées.

12. Parc éolien (300) selon la revendication 10 ou la revendication 11, dans lequel ledit processeur (200) est configuré pour calculer le niveau d'émission sonore qui maximise une différence entre la pénalité et ladite au moins une d'une puissance générée par ladite première éolienne (100) et d'une valeur économique 1 attribuée à ladite première éolienne.

13. Parc éolien (300) selon l'une quelconque des revendications 10 à 12, dans lequel un niveau d'émission sonore souhaité d'une première éolienne (100) est calculé (504) en résolvant l'algorithme d'optimisation :

$$f_k(x_k) + \frac{\partial f_i}{\partial x_k} * x_k - Q_i * \frac{\partial L_i}{\partial x_k} * x_k - \sum_{j=1}^{M} P_j * n_{kj}(x_k).$$

dans lequel $j$ est un indice de récepteur sonore (302), $k$ est un indice de la première éolienne (100) positionnée dans une zone de détection (308) du récepteur sonore (302), $i$ est un indice d'une deuxième éolienne (100) positionnée dans une zone de sillage de la première d'éolienne (100), et $f_k(x_k)$ est la PEA ou la valeur économique ou puissance de la première éolienne (100) en fonction du niveau d'émission sonore $x_k$ de la première éolienne (100).

14. Procédé d'optimisation du fonctionnement d'au moins une éolienne (100) configurée pour générer une émission sonore en cours de fonctionnement dotée d'un système de commande (150) selon l'une quelconque des revendications 1 à 9, ledit procédé comprenant :

   la réception d'au moins une notification de pénalité identifiant une pénalité évaluée sur la base d'une émission sonore générée par l'au moins une éolienne (100) ;
   le calcul (412) du niveau d'émission sonore ($x_i$) à générer par l'éolienne (100) sur la base de la pénalité et sur la base d'au moins l'une d'une puissance générée par l'éolienne et d'une valeur économique,
   tout en maximisant la différence entre la puissance de sortie ou la valeur économique de l'éolienne (100), et la pénalité imputable à l'éolienne (100) de façon à générer une fonctionnalité nette maximale de l'éolienne (100) ;

et l'ajustement (414) d'au moins une caractéristique de l'éolienne pour amener l'éolienne à fonctionner au niveau d'émission sonore ($x_i$) calculé.

# FIG. 1

FIG. 2

EP 2 469 081 B1

# FIG. 3

FIG. 4

# FIG. 5

400

402

MEASURE ACOUSTIC EMISSIONS RECEIVED BY EACH ACOUSTIC RECEPTOR

404

COMPARE ACOUSTIC EMISSIONS TO ACOUSTIC THRESHOLD

406

DETERMINE PENALTY TO BE ASSESSED IF ACOUSTIC EMISSIONS EXCEED THE ACOUSTIC THRESHOLD

408

TRANSMIT PENALTY NOTIFICATION TO AT LEAST ONE WIND TURBINE

410

RECEIVE PENALTY NOTIFICATION FROM AT LEAST ONE ACOUSTIC RECEPTOR

412

CALCULATE ACOUSTIC EMISSION LEVEL THAT GENERATES MAXIMUM NET UTILITY FROM WIND TURBINE

414

ADJUST AT LEAST ONE COMPONENT AND/OR CHARACTERISTIC OF WIND TURBINE TO OPERATE AT CALCULATED ACOUSTIC EMISSION LEVEL

# FIG. 6

500

┌─ 402

MEASURE ACOUSTIC EMISSIONS RECEIVED BY EACH
ACOUSTIC RECEPTOR

┌─ 404

COMPARE ACOUSTIC EMISSIONS TO ACOUSTIC THRESHOLD

┌─ 406

DETERMINE PENALTY TO BE ASSESSED IF ACOUSTIC
EMISSIONS EXCEED THE ACOUSTIC THRESHOLD

┌─ 408

TRANSMIT PENALTY NOTIFICATION TO AT LEAST ONE
WIND TURBINE

┌─ 410

RECEIVE PENALTY NOTIFICATION FROM AT LEAST ONE
ACOUSTIC RECEPTOR

┌─ 502

RECEIVE PENALTY NOTIFICATION FROM AT LEAST ONE
WIND TURBINE

┌─ 504

CALCULATE ACOUSTIC EMISSION LEVEL THAT GENERATES
MAXIMUM NET UTILITY FROM WIND TURBINE

┌─ 414

ADJUST AT LEAST ONE COMPONENT AND/OR
CHARACTERISTIC OF WIND TURBINE TO OPERATE AT
CALCULATED ACOUSTIC EMISSION LEVEL

**EP 2 469 081 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010037387 A